Europäisches Patentamt

**European Patent Office**

**Office européen des brevets**

(11) Publication number: **0 019 895**
A1

## (12) EUROPEAN PATENT APPLICATION

(21) Application number: **80102924.0**

(22) Date of filing: **24.05.80**

(51) Int. Cl.³: **F 16 L 23/04**

(30) Priority: **29.05.79 US 43867**

(43) Date of publication of application: **10.12.80**
**Bulletin 80/25**

(84) Designated Contracting States: **BE DE FR GB IT NL**

(71) Applicant: **THE DOW CHEMICAL COMPANY,**
**2030 Abbott Road Post Office Box 1967, Midland,**
**Michigan 48640 (US)**

(72) Inventor: **West, Walter Hewitt, 601 Main Street,**
**Essexville, Michigan (US)**

(74) Representative: **Hann, Michael, Dr. et al,**
**Postfach 5524 Ludwigstrasse 67, D-6300 Giessen (DE)**

(54) Improved lined pipe assembly.

(57) A pipe assembly is provided wherein a conduit (11) is provided with a synthetic resinous material liner (13) both of which are deformed to provide an outwardly flaring flange (15, 16), a tapered ring (17) is disposed on the conduit adjacent the flange (15) and joined to a similar conduit (11a) or cast fitting by means of a split «V» clamp (21).

EP 0 019 895 A1

0019895

IMPROVED LINED PIPE ASSEMBLY

The invention relates to an improved plastic lined pipe assembly. More specifically, the invention relates to an improved plastic lined pipe assembly of light weight which provides a strong and reliable joint between elements in the pipe assembly.

For many years pipes or conduits have been employed to transport liquids of a corrosive nature. Oftentimes, materials which provide the desired resistance to corrosion do not provide adequate physical properties to resist stresses normally applied to such a pipe. Therefore, two-layer conduits have been employed wherein a corrosion resistant lining is applied to a conduit having the desired physical resistance, for example, rubber or wood lined steel pipe. Of considerable commercial importance are synthetic plastic material lined steel pipes. Some pipes are lined with a thermosetting resin while others are lined with a thermoplastic resin. For many applications a particularly desirably combination is a thermoplastic liner of substantial thickness; for example, in a 2 inch diameter pipe a liner may be as thick as 5 millimeters while the pipe wall may be on the order of 3.5 millimeters in thickness. Such lined pipes provide excellent service. However, such pipes are relatively heavy and cumbersome to handle when used in situations where frequent assembly and disassembly is required. Further, a wide variety of connecting joints may be employed for such pipes. One highly desirable connecting joint is prepared by removing a terminal portion of the pipe, applying a flange to the pipe and subsequently applying a flange to the protruding end of the liner to conform to the pipe flange. Such techniques are disclosed in U.S. Patent Nos. 3,335,484; 3,383,750; 3,390,442; 3,448,491; 3,461,505; and 3,650,550. Means of joining such pipes are disclosed in U.S. Patent Nos. 3,284,107 and 3,284,108. Light weight plastic lined pipes are disclosed in U.S. Patent Nos. 3,838,823 and 3,742,590. A particularly convenient means of flaring both pipe and liner simultaneously is disclosed in U.S. Patent No. 3,744,115.

The pipe joint of the invention comprises a synthetic resinous material liner disposed within a metal pipe, said liner and pipe having at least one end which is pressure deformable to define a radially outwardly projecting flange composed of the pipe and the liner, a ring loosely disposed about the pipe and having a generally planar face positioned adjacent to the metal flange, said ring having a tapered face remote from the metal flange, said tapered face tapering outwardly towards an outer periphery of the metal flange, and a split "V" clamp disposed about the ring and an opposed surface of generally like configuration for forcing the liner against an opposed sealing face.

Further features and advantages of the present invention will become more apparent from the following description when taken in connection with the drawing wherein:

Figure 1 is a cross-sectional view of a joint between two pipes in accordance with the present invention;

Figure 2 is a representation of a loose ring and cross-section thereof employed in the joint of Figure 1;

Figure 3 is a side view of the split "V" clamp of Figure 1;

Figure 4 depicts a plastic lined pipe elbow suitable for the practice of the present invention,

Figure 5 is a fractional view of one flange of a plastic lined conduit for a valve adapted for use in the present invention.

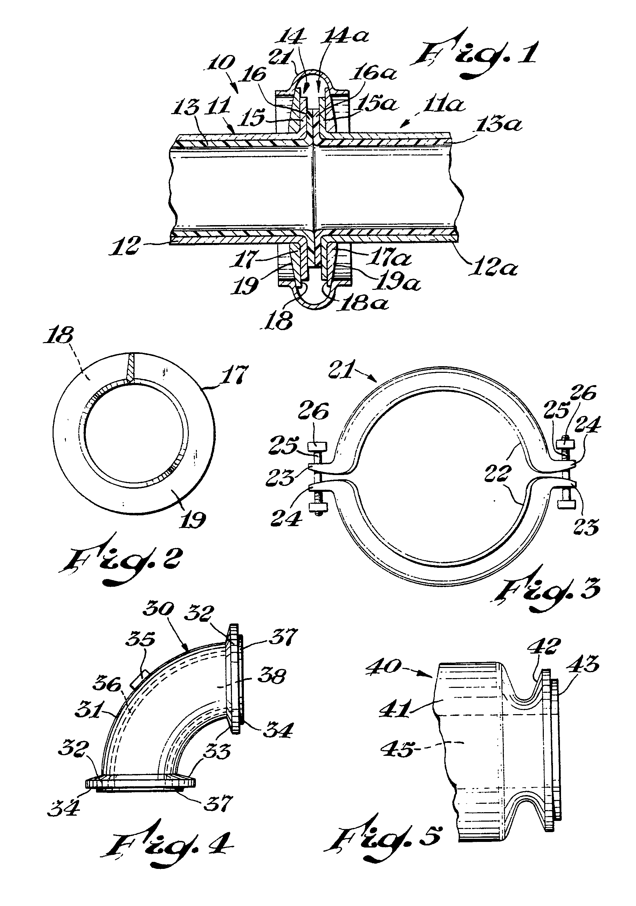

In Figure 1 there is depicted a joint 10 comprising a first pipe 11 and a second pipe 11a of like construction. The pipe 11 comprises a generally cylindrical metal body 12 having disposed therein a substantially cylindrical plastic liner 13. The pipe 11 terminates in a flange 14 which extends radially outwardly from the cylindrical metal body 12 to form metal flange portion 15. The liner 13 similarly terminates in a plastic flange portion 16 which is in engagement with a like plastic flange portion 16a of the second lined pipe 11a. Split rings 17 and 17a are loosely disposed about the pipes 11 and 11a respectively. Each ring 17, 17a has a generally planar radially extending face 18 and 18a disposed immediately adjacent the metal flange 15 and 15a. Each ring 17 and 17a also has a tapered face 19 and 19a which is tapered toward the outer periphery of the flange 14 and 14a and which is disposed remote therefrom. A split generally "V"-shaped clamp 21 is disposed about the rings 17 and 17a and engages the tapered faces 19 and 19a thereby forcing the liner flange portions 16 and 16a into sealing engagement with each other.

In Figure 2 there is depicted a planar view of split ring 17 showing the tapered face 19. The cross-sectional configuration of the ring is superimposed on the uppermost portion of the ring.

Figure 3 depicts the "V" clamp 21 in an open or disassembled configuration. The clamp 21 comprises two identical clamping halves 22. Each clamping half 22 comprises a generally semi-circular channel, having the cross-sectional configuration more fully illustrated in Figure 1. Each clamping half terminates in a first or narrow, generally radially outwardly extending lug 23 and a second or broad, generally radially outwardly extending lug 24. The lugs 23 and 24 each define an opening through which extends a threaded bolt 25 having a nut 26 for securing the clamping halves together. It will be understood that in some applications, the narrow lug 23 may extend into the broad lug 24 when the clamping halves are in the fully secured position. It is also within the scope of the present invention to provide one clamping half with a pair of narrow lugs and the other clamping lug with a pair of broad lugs such that both of the narrow lugs on the one clamping half can extend into the broad lugs of the other clamping half.

0019895

In assembling the joint of Figure 1, a ring 17, 17a is placed over an end of the pipe 11, 11a to be flanged such that the planar face 18, 18a of the ring is disposed adjacent the end of the pipe and the tapering face is disposed remote from the end. The end of the pipe is then flanged, for example, by the method set forth in U.S. Patent No. 3,744,155 by forming the pipe flange 15, 15a and liner flange 16, 16a, simultaneously by hydraulic pressure. A second pipe is prepared in the same manner and placed in an abutting relationship with the flanged end of the first pipe. The clamp 21 is then applied over the rings 17 and 17a and tightened by bolts 25 to provide an appropriate sealing force for the particular material of the plastic flange and pipe size utilized.

In Figure 4 there is depicted a plastic lined pipe 30 in the shape of a 90° elbow. The pipe comprises an outer body portion 31 of metal, such as cast steel. At opposite ends of the pipe are disposed like flanges 32 which are advantageously cast integrally with the body portion 31. The flanges 32 have a first or tapered face 33 such that the flanges are thinner at their outer ends and as the flange diameter increases away from the body portion 31. The flanges 32 have generally planar radially extending faces 34 remote from the tapered faces 33. The body portion 31 is provided with an indexing tab or projection 35 which serves as a reference which is conveniently used when the body portion 31 is provided with a plastic liner 36. The plastic liner 36 covers the entire inner surface of the body portion 31. Additionally, a major portion of the radial flange face 34 of the body portion 31 is covered with the plastic flange 37. The liner 36 defines an internal passageway 38 providing fluid communication from one end of the elbow to the other.

Other pipe fittings such as tees and Y's, crosses, reducers, blind flanges, and caps are readily constructed and utilized in accordance with the teachings of the present invention. The tapered flange configuration is readily employed with such a variety of fittings.

In Figure 5 there is depicted a fractional view of a valve 40 having a fluid passage 45. The valve is constructed with a conventional flange which is turned or milled to a configuration as illustrated in Figure 5. More specifically, the valve has a body portion 41, a flange portion 42 and a plastic liner portion 43. The configuration of the flange and liner portions 42, 43 are generally identical to the flange and liner portions 32, 37 of the elbow 30 of Figure 4.

Pipes and valves constructed in accordance with the present invention are particularly convenient for assembly as no fastening means are provided for connecting the conduits and other components in a predetermined fixed position. Thus, any element in the system may be rotated to any desired degree and readily clamped together in sealing relationship. The present invention provides interconnected joints of remarkable stability when subjected to heating and cooling cycles. Tightening of the joints is not required as frequently with plastic liners as would be in more rigid systems. The ring, in combination with the pipe and liner flanges and the "V" clamp, provide a degree of resiliency which greatly tends to reduce cold flow of the liner flanges 16, 16a while maintaining reliable sealing pressure.

Joints in accordance with the present invention show excellent load bearing properties particularly when placed under loads which are coaxial with the pipes. Such joints whether pipe-to-pipe or pipe-to-fitting are satisfactory for pressures of up to 150 pounds per square inch when a Schedule 10 steel conduit is employed with a plastic lining having a thickness of 1/16 of an inch.

As is apparent from the foregoing specification, the present invention is susceptible of being embodied with various alterations and modifications which may differ particularly from those that have been described in the preceding specification and description. For this reason, it is to be fully understood that all of the foregoing is intended to be merely illustrative and is not to be construed or interpreted as being restrictive or otherwise limiting of the present invention, excepting as it is set forth and defined in the hereto-appended claims.

0019895

1. An improved pipe joint comprising a synthetic resinous material liner disposed within a metal pipe, said liner and pipe having at least one end which is pressure deformable to define a radially outwardly projecting flange composed of the pipe and the liner, a ring loosely disposed about the pipe and having a generally planar face positioned adjacent to the metal flange, said ring having a tapered face remote from the metal flange, said tapered face tapering outwardly towards an outer periphery of the metal flange, and a split "V" clamp disposed about the ring and an opposed surface of generally like configuration for forcing the liner against an opposed sealing face.

2. The pipe joint of Claim 1, wherein said "V" clamp comprises a pair of clamping halves adapted to be secured by securing means, each clamping half comprising a semi-circular channel and a pair of outwardly extending lugs, wherein one lug on each clamping half is of a norrow width and wherein the other lug is of a relatively broader width such that the narrow lug on one clamping half is adapted to extend into the broad lug of the other complementary clamping half.

3. The pipe joint of Claim 1, wherein said "V" clamp comprises a pair of clamping halves which are adapted to be secured by securing means, each clamping half comprising a semi-circular channel and a pair of lugs projecting outwardly from the terminal ends of the semi--circular channel, wherein the lugs of one clamping half are of a narrow width and wherein the lugs on the other clamping half are of a relatively broader width such that the narrow lugs of said one clamping half are adapted to extend into the broad lugs of the other clamping half when the clamping halves are in a clamping position.

*Fig. 1*

*Fig. 2*

*Fig. 3*

*Fig. 4*

*Fig. 5*

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | US - A - 3 406 991 (M.S. DECKER, JR. et al.) <br> * fig. 1 * <br> -- | 1 | F 16 L 23/04 |
| | US - A - 3 335 758 (E.C. BERTOLET, JR.) <br> * fig. 1 * <br> -- | 1 | |
| | US - A - 3 235 291 (L. JACOBY) <br> * fig. 2 * <br> -- | 1 | **TECHNICAL FIELDS SEARCHED (Int.Cl.³)** |
| | FR - A - 1 012 286 (C. EHRHARD) <br> * fig. 2 * <br> -- | 1 | F 16 L 21/00 <br> F 16 L 23/00 |
| | DE - B - 1 268 456 (AEROQUIP) <br> * fig. 1 to 5 * <br> -- | 2,3 | F 16 L 25/00 |
| A | US - A - 3 398 978 (F. GASCHE) <br> * complete document * <br> -- | | |
| A | US - A - 2 919 936 (R.T. HURLEY) <br> * complete document * <br> -- | | |
| A | DE - C - 561 772 (AUBOURG & BAILLON) <br> * complete document * <br> -- | | **CATEGORY OF CITED DOCUMENTS** |
| D | US - 1 - 3 742 590 (B. DOUGLAS) <br> ---- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | | | &: member of the same patent family, corresponding document |

| The present search report has been drawn up for all claims | | |
|---|---|---|
| Place of search <br> Berlin | Date of completion of the search <br> 26-08-1980 | Examiner <br> SCHLABBACH |

EPO Form 1503.1  06.78